# EUROPEAN PATENT SPECIFICATION

(11) **EP 2 063 713 B1**
(45) Date of publication and mention of the grant of the patent: **09.06.2010**
(21) Application number: 07733841.6
(22) Date of filing: 13.03.2007
(51) Int. Cl.: A01N 59/20, A01N 25/04, A01P 3/00

(54) **BORDEAUX MIXTURE SUSPENSION AND PROCESS FOR THE PREPARATION THEREOF**
BORDEAUX-MISCHUNGS-SUSPENSION UND VERFAHREN ZU IHRER HERSTELLUNG
SUSPENSION DE BOUILLIE BORDELAISE ET PROCEDE POUR LA PREPARATION DE CELLE-CI

(30) Priority: 17.03.2006 HU 0600209
(43) Date of publication of application: 03.06.2009
(73) Proprietor: Szegö, Andras, 1088 Budapest (HU); Detre, Tamas, 2626 Nagymaros (HU); Marmarosi, Tamasne, 2051 Biatorbagy (HU); Kollarik, Laszlone, 1045 Budapest (HU); Racz, Istvan, 1224 Budapest (HU); Szabo, Zoltan, 1047 Budapest (HU)
(72) Inventor: SZEGÖ, András, 1088 Budapest (HU); DETRE, Tamás, 2626 Nagymaros (HU); MÁRMAROSI, Tamásné, 2051 Biatorbágy (HU); KOLLÁRIK, Lászlóné, 1045 Budapest (HU); RÁCZ, István, 1224 Budapest (HU); SZABÓ, Zoltán, 1047 Budapest (HU)
(74) Representative: Marmarosi, Tamasné
(86) International application number: PCT/HU2007/000024
(87) International publication number: WO 2007/107802

(56) References cited:
- EP-A1- 0 766 919
- US-A- 2 998 345
- DATABASE WPI Week 199006 Derwent Publications Ltd., London, GB; AN 1990-039314 XP002440949 & HU 49 990 A (SZEGO A) 28 December 1989 (1989-12-28) cited in the application

## Description

The invention relates to bordeaux mixture suspension and process for the preparation thereof.

There are two possible ways of making aqueous suspension, namely by physical or chemical processes.

During the physical process a large amount of energy is transferred mechanically into the system. The disadvantage of the process is that only a very small part of the applied expensive energy is used for grinding, most of it is converted to heat, and therefore the equipment is to be cooled intensively either directly or by the grinding medium. Another characteristic of this method is that with the increase of the fineness of grinding, the required energy increases exponentially, and the achievable fineness is limited. It is impossible to get particles under the size of 1-2 µm by grinding, even by using the most modem equipment.

It has been a long time since the first efforts were made to find and apply a method by which the above mentioned disadvantages can be avoided. This can only be achieved by an intervention during the formation of solid particles, i.e. by using chemical processes, generally called precipitation. The essence of the process is that the desired compound is prepared by chemical reaction in a water/solvent medium, and the conditions of the operations are influenced to obtain the desired particle structure. Whether the solid component of the suspension (which can be inorganic or sometimes organic) is formed by grinding or by precipitation, the surface of the material is not homogenous as far as its electric charge or charge distribution is concerned. The medium, which in most cases is water, is also polar. There are two consequences of this. There are interactions on one hand between the particles, and on the other hand between the particle and the small molecules, they stick together, and structures with hydrogen boundings are built.

It follows from this that the viscosity increases significantly, and to break it e.g. by stirring, energy must be applied. The effect of the phenomenon gets stronger as the size of the particles decrease, according to the relevant laws of physical chemistry. Therefore from very fine particles of µm size only relatively thin suspensions can be prepared.

The viscosity can be decreased, and the flowing rate can be increased by the use of surfactants. The surfactants are of dual property, one part of the molecule is apolar, and the other is strongly polar containing in most cases a sulfonic acid group. A further property of them is that they are big molecules and their size can be made bigger by polymerization. Due to their strongly anionic group they can break the spontaneously formed weak bonds, and create protecting colloids.

There are many fields of application where beside the finest particle size very high solid material content is desired. The copper containing plant protecting agents have been known and used for about 250 years. They will remain irreplaceable for a long time, even, due to the efforts made to produce healthy, biological food, they will become popular again. The most important member of this agent family is the bordeaux mixture. In the beginning different copper containing chemicals were applied. At first aqueous solution of copper sulfate was used for the protection of cultivated plants most importantly vine against the spread of serious diseases caused by fungi. It was realized very soon that though the copper sulfate kills the pathogenic fungi, it causes at the same time the so called "singeing" of the vine to be protected, and in serious cases the damage caused is comparable with that the fungi infection would caused.

It turned out that the ionic copper of acidic dissociation, being general cell poison, also damages the plant cells. Therefore, one has to create such conditions in the solution that the concentration of the dissolved copper in the spray is suitable for killing the fungi, but the cells of the plant are not damaged yet. In the course of numerous practical experiments it was discovered that there are copper salts which meet the above mentioned requirements. These salts are formed by the neutralization of copper sulfate by basic materials. Such salts are the bordeaux mixture prepared by mixing copper sulfate with slaked lime, the active agent of which is the so called bordeaux complex, and the Burgundy mixture, the carbonate salt, prepared by the neutralization of copper sulfate with sodium carbonate. Later the copper oxychloride, and after the recent development of its production processes, the copper hydroxide were put on the market. It follows from the above that the effect is the result of the direct contact of the living organism, i.e. the cell, and the ionic copper solution. The low speed of dissolution and the spreading of the dissolved material in the sprayed drops through diffusion are characteristic for materials of this type. Due to these the concentration changes with the distance from the particle, i.e. decreases according to the gradients determined by the speed of dissolution and the actual diffusion conditions.

In the Hungarian patent specification No. 200657 a process is disclosed for the preparation of Bordeaux mixture containing tribasic copper sulfate complex of 1300-1400 nm particle size in 20-40 % by weight. US 2 998 345 discloses Bordeaux mixture hydrogels without mentioning any particle size. Our aim was to prepare a liquid suspension, in which the size of the tribasic copper sulfate complex particles is fine, preferably under 1 µm, i.e. of nm, and its concentration is the highest possible.

These requirements contradict each other. Their satisfaction seems to be possible only by making serious compromises. According to previous experiences one can get fine particle size only in diluted solution, because the relation of the crystal growth and the speed of crystal nucleus formation has to be shifted towards the latter. A possibility is presented by the experience that there are surfactants, which adsorb on the surface of the crystals forming a so-called double layer there, and besides, due to their molecule structure, they also create colloid film. The dissolved compounds needed to make the crystal grow have to penetrate this barrier by diffusion. This decreases the speed of crystal growth, in the ready-packed product the concentration of the dissolved material increases due to the acceleration of the crystal nucleus formation. The condition of all these is that the materials mentioned above be present in required quantity. Otherwise they will not be able to create layers covering perfectly the newly formed particles. The effect can be weakened by high temperature, which by decreasing the stability of the coat shifts the forming system towards the increase of the average particle size.

As for increasing the concentration of copper complex in the bordeaux mixture there are further limitations. The bordeaux mixture as described above can be prepared by mixing solutions of slaked lime and copper sulfate. Due to rheological reasons the slaked lime content can be increased only to a certain degree, and the solubility of the copper sulfate is also limited. Consequently, by the currently applied processes the active ingredient content of the final product can be increased only to a maximum determined by the above factors.

The problems of the preparation of bordeaux mixture of high concentration are: the heterogeneous phase reaction, the viscosity of the dispersed phases, and contact of the components during the reaction.

A suitably selected dispersing agent can influence the viscosity of the dispersed phase during the reaction. The reaction can be carried out by continuous, quasi-continuous, quasi-step-by-step and step-by-step processes.

To assure the desired biological effectiveness and suspension stability, the particle size of the tribasic copper sulfate/calcium complex must be in the nanometer range. The economical performance of the continuous process disclosed in the Hungarian patent specification No. 200657 is hindered by the difficulties of process-controlling and the complexity of the equipment applied. The step-by-step processes are not suitable for reaching the nanometer range.

Surprisingly the desired aim can be achieved by using a quasi-continuous process, and a special primary dispersing agent of formula I (henceforth abbreviated: PD).

The subject of the invention according to the above aim is a suspension of hydrogel structure, containing 350-875 g/l of tribasic copper sulfate/calcium complex of formula CuSO₄x3Ca(OH)₂x4H₂O and of 600-750 nm average particle size.

The subject of the invention is more specifically a suspension of hydrogel structure, containing 350-875 g/l of tribasic copper sulfate/calcium complex of formula CuSO₄x3Ca(OH)₂x4H₂O and of 600-750 nm average particle size, as well as primary dispersing agent methylnaphthalenesulfonic acid sodium dimer salt, a compound of formula (I) 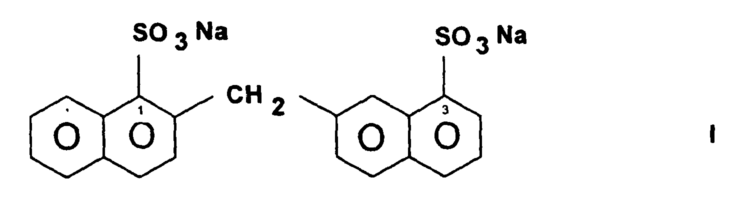
- which contains less than 4 % by weight of monomer, less than 3 % by weight of polymer the condensation degree of which is higher than 2, less than 5 % by weight of sodium sulfate -, and optionally a secondary dispersing agent and other auxiliary materials.

The suspension according to the invention contains 27-71.5 % by weight of tribasic copper sulfate complex, 4-10 % by weight of methylnaphthalenesulfonic acid sodium dimer salt, 0-4 % by weight of secondary dispersion agent, 0.5-1,.5 % by weight of mineral or vegetable oil, 0.1-2 % by weight of emulsifier, 0.1-0.5 % by weight of antisedimentation agent, and to 100 % by weight of water.

As secondary dispersing agent (henceforth abbreviated: SD) alkylaryl phosphate ethoxylated salt, preferably ethoxylated (EO=10) nonylphenol phosphate monoethanolamine, as emulsifier a fatty alcohol polyglycol ether, preferably the polyglycol ether (EO=10) of a C₁₂₋₁₈ alcohol, as antisedimentation agent a synthetic polymer, polyvinyl alcohol, polyvinylpyrrolidone, polyacrylic acid alkali salt, polyvinylalcohol-polyvinylpyrrolidone copolymer, a copolymer containing vinyl acetate or natural polymers, alginates, polysaccharides, preferably Xantan gum, as mineral and vegetable oil preferably paraffin oil can be used.

According to the invention a suspension of hydrogel structure, containing 350-875 g/l of tribasic copper sulfate/calcium complex of formula CuSO₄x3Ca(OH)₂x4H₂O and of 600-750 nm average particle size, as well as primary dispersing agent methylnaphthalenesulfonic acid sodium dimer salt, a compound of formula (I) 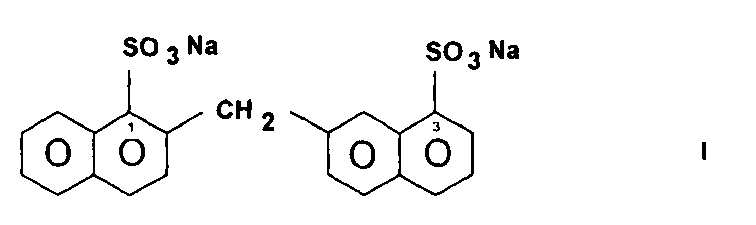
- which contains less than 4 % by weight of monomer, less than 3 % by weight of polymer the condensation degree of which is higher than 2, less than 5 % by weight of sodium sulfate -, and optionally a secondary dispersing agent and other auxiliary materials, can be prepared in the following way:
   a) for the preparation of a suspension containing 350-470 g/l of tribasic copper sulfate/calcium complex a solution containing copper sulfate pentahydrate, primary dispersing agent and water in a weight ratio of (29-42):(7-9):(64-50) and a suspension containing calcium hydroxide, primary dispersing agent, ethylene glycol and water in a weight ratio of (35-45):(8-10):(9-11):(38-43) are mixed during 35-45 minutes in a weight ratio of (4.6-3.3):1 in such a way that during mixing the pH value is between 8 and 10 and the temperature is 35-55 °C, then the suspension containing the complex formed by precipitation is stirred till the pH reaches the 8-8.2 value, then the complex formation is sequentially repeated till 350-470 g/l of complex content in such a way that the suspension content of the reactor is reduced to 40-60 % by volume, and under the conditions of the previous precipitation the repeated precipitation is completed to 100 % reactor volume, or
   b) for the preparation of a suspension containing 350-875 g/l of tribasic copper sulfate/calcium complex, a powder mixture containing copper sulfate pentahydrate, primary dispersing agent and calcium hydroxide in a weight ratio of (65-75):(10-20):(15-20) is added at 50-80 °C to a solution containing secondary dispersing agent and water of 50-80 °C in a weight ratio of (10-20):(80-90) with intensive stirring in such a way that the weight ratio of the copper sulfate powder mixture and the secondary dispersing agent be (1.6-3.8):1, the pH 8-10, and the temperature of the precipitation 50-80 °C, then the complex formation is sequentially repeated till 350-875 g/l of complex content in such a way that the suspension content of the reactor space is reduced to 40-60 % by volume, and the repeated precipitation is completed to 100 % reactor volume under the conditions of the previous precipitation, then to the suspension obtained optionally secondary dispersing agent and other auxiliary material(s) are added.

The particle size of the copper sulfate pentahydrate used in the process according to the invention is preferably under 0.2 mm (95 %). The calcium hydroxide is applied in form of slaked lime, preferably having a particle size of 1-3 µm, and if the calcium hydroxide is used in the form of a,powder mixture, the particle size is preferably under 0.1 mm (95 %).

In process a) a solution containing copper sulfate, primary dispersing agent and water in a weight ratio of (29-42):8:(64-50), and a suspension containing calcium hydroxide, primary dispersing agent, ethylene glycol and water in a weight ratio of 40:9:10:41 are preferably used.

According to process b) a powder mixture containing the copper sulfate, primary dispersing agent and calcium hydroxide in a weight ratio of 69:17:14, while the secondary dispersing agent and the water in form of a solution containing them in a weight ratio of 10:90 are preferably used.

At the sequential precipitation the ratios of the components and phases do not change. Surprisingly the complex of nanometer size could be prepared in a simple and controlled way, if the products of each sequential precipitation were removed in a constant way, and the process was repeated according to the working volume of the reactor. In the process the reaction volume and the concentration of the formed complex is constant.

Aryl substituted sulfonic acids and/or alkylaryl substituted sulfonic acids or salts thereof are dispersing agents which can be used especially advantageously according to many patent specifications. Such applied agents are the Tristil phenol (monoaryl) phenolsulfonic acids, their sodium, potassium and triethanolamine salts. Advantages are described in case of using naphthalene (diaryl)sulfonic acids and salts thereof. Such compounds are the diisopropylnaphthalenesulfonic acid sodium salt and the metylnaphthalenesulfonic acid sodium salt. Surprisingly, from among the known sulfonic acid dispersing agents, only the dispersing agent of formula (I) used in the composition and process according to the invention is suitable for the preparation of the suspension of the desired properties, and only, if it contains less than 4 % by weight of monomer, less than 3 % by weight of polymer the condensation degree of which is higher than 2, and less than 5 % by weight of sodium sulfate.

From among the products, declared to be identical by the different manufacturers, the suitable dispersing agent can be selected by utilising a combination of sensitive analytical instruments.

The primary dispersing agent can advantageously be used in a way that the aliquot part of it is dissolved in the copper sulfate solution, and the rest of it is dissolved in the calcium hydroxide suspension. Thus, applying the suitable contacting conditions (pH, temperature), a suspension of 350-466 g/l (27-37.9 % by weight) tribasic copper sulfate/calcium complex concentration can be prepared.

The quantity of the tribasic copper sulfate/calcium complex (henceforth bordeaux complex) in the resulting reaction mixture can be regulated by the quantity of the copper sulfate present in the copper sulfate solution. The precipitation can be repeated sequentially quasi-continuously.

Stable formulation of 350-450 g/l (27-47.9 % by weight) concentration can be prepared by using suitably selected secondary dispersing agent, wetting agent and antisedimentation agent.

The precipitation with powder mixture can be advantageously carried out by adding the whole quantity of the primary dispersing agent to the mixture of copper sulfate and calcium hydroxide. The powder mixture is reacted in the given quantity of water at a temperature, pH and addition rate in the range declared suitable. By this method 350-875 g/l (27-71.5%by weight) bordeaux complex concentration can be obtained. The active ingredient content of the precipitated bordeaux complex can be regulated by the ratio of the water and the powder mixture.

The bordeaux complex content of the precipitation obtained by using powder mixture can be increased by the dissolution of a part of the secondary dispersing agent in the aqueous phase. At a suitable ratio of the powder mixture and secondary dispersing agent, at a given temperature, pH and rate of addition, a maximum concentration of 875 g/l can be achieved. The precipitation can be repeated sequentially quasi-continuously.

Surprisingly, when comparing the composition according to the present invention to the product on the market, significant physical and biological differences were measured.

The composition according to the present invention is marked No. 02.

### (Example 1).

The reference composition is marked No. 01. [prepared by continuos technology, the Bordói lé FW (charge number 2000/4) marketed in Hungary].

| Identities | No. 01. | No. 02. |
|---|---|---|
| 1. bordeaux complex content | 350 g/l (28.5 % by weight) | |
| 2. standard floatability | above 95 % | |
| 3. primary dispersing agent | the monomer of the polymer is identical | |
| 4. the pH of the product | 8-8.2 | |
| 5. the shape, morphology and character of the complex | almost spherical, amorphous, hydrogel | |

| Differences | No. 01. | No. 02. |
|---|---|---|
| 1. the technical character of the reactor | continuous | sequential quasi-continuous |
| 2. the place where the copper sulfate and the hydrate of lime is contacted | in two different equipment | in one equipment |
| 3. the pH of the precipitation | at point No. 1: 14 | 8-10 |
| | at point No.2: 7,5 | |
| 4. the quantity of the puffer medium of the reaction (% by volume) | permanent (95 %) | changing continuously (50-100%) |
| 5. the average particle size: d [nm] | 1300-1400 | 600-750 |
| 6. the specific surface of the complex [cm²/g] | 1400-1600 | 3300-3400 |
| 7. primary dispersing agent | heterodisperse polymer | monodisperse polymer |
| 8. the maximum bordeaux complex content achievable (% by weight) | 40 | 71,5 |
| 9. the residence time of the bordeaux complex in the reactor [min.] | 0,2-0,3 | 20-30 |
| 10. biological effectiveness | | the double of that of No.01. |

### Conclusions one can draw from the comparisons

1. Both products are hydrogel from colloidical point of view. This is proved by thermoanalytical process. According to the examinations the physically bound water content of the hydrogel is 2-4 %. This water is in physically adsorbed state on the surface of the bordeaux complex. When the composition or the spray is dried under normal conditions, the bordeaux complex loses the physically bound water and forms an amorphous powder. The water loss of the hydrogel is an irreversible process, i.e. the hydrogel structure ceases and cannot be restored by repeated dispersion in water.
2. By using optimal reaction conditions and dispersing agent
   - the particle size of the bordeaux complex decreases to its half,
   - its specific surface increases threefold,
   - its biological effectiveness is doubled.

The difference between the biological effectiveness of products No. 01. and No. 02 is proved by their agricultural application.

| | No. 02. | No. 01. |
|---|---|---|
| Culture | Effective doses [l/ha] | Effective doses [l/ha] |
| Vine | 5 | 10 |
| Pomiferous plants | 5 | 10 |
| Potato | 5 | 10 |
| Vegetables | 0.5 | 1 |

Equipments, measurements and abbreviations referred to in the specification and examples.
1. Particle size analysis:
   Malvern 2600 laser granulometer
   Malvern Mastersizer 2000 laser granulometer
   Retsch VSC ultrasound generator micro sieves of 5 µm and 30 µm size
2. Floatability:
   according to CIPAC MT 11 and 18
3. Determination of copper content:
   by iodometry
4. Determination of density:
   by digital densitometer
5. Microscopic view:
   Zeiss microscope with immersion techniques, equipped with coloured and black-and-white digital camera and computer
   PD: primary dispersing agent
   SD: secondary dispersing agent
   The details of the invention are disclosed in the examples without limiting the invention to them.

### Example 1a)

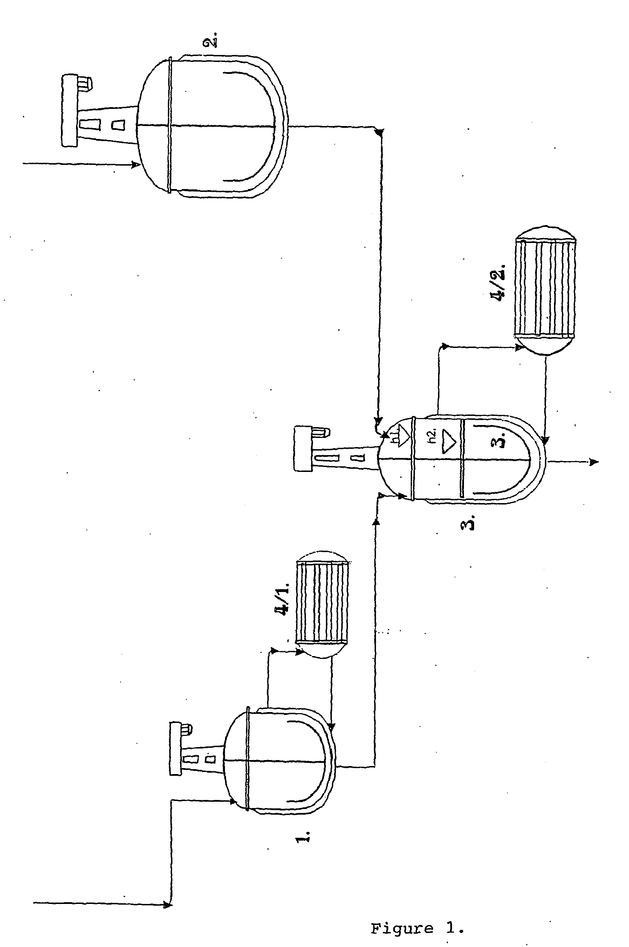

The following materials in the given order are weighed into the equipment No. 1 showed on Figure 1 used for dissolving copper sulfate:

| | |
|---|---|
| warm water of 50 °C | 1540 g |
| PD | 174 g |
| copper sulfate pentahydrate (CuSO₄·5H₂O) | 703 g |

The mixture is stirred till complete dissolution. The solution is kept at 45 °C by means of thermostat No. 4/1.

The following materials in the given order are weighed into the equipment No.2 shown on Figure 1 used for the preparation of slaked lime suspension:

| | |
|---|---|
| slaked lime (of 50 % by weight calcium hydroxide content) | 943 g |
| PD | 107 g |

The intensive stirring is continued until a homogenous, thin suspension is obtained (15-20 minutes). After that

| | |
|---|---|
| ethylene glycol | 117 g |

is added.

The mixture is stirred for further 5 minutes.

In further Examples the preparation of the copper sulfate/slaked lime suspension is repeated several times, if necessary.

### Example 1b)

The starting bordeaux complex precipitation is carried out in equipment No. 3 shown on Figure 1.

Into the equipment No. 3 220 g of slaked lime suspension is weighed from the equipment No. 2, and with stirring at a temperature of 45-50 °C , 1020 g of copper sulfate solution is added to it from the equipment No. 1 in about 60 minutes. During the addition the pH is kept between 8 and 10. The 40-45 °C temperature of the reactor No. 3 is regulated by means of thermostat No 4/2. After the addition is completed, stirring is continued for 25 minutes. The pH value should be adjusted to 8-8,2. If necessary, the pH is corrected by addition of copper sulfate solution (maximum 0-20 g is needed).

### Example 1c)

The sequential precipitation is carried out in the following way.

The suspension prepared according to Example 1b) in the equipment No. 3, the volume of which is about 1000 ml (h₁ = 1000 ml), is halved (h₂ = 500 ml). To the starting suspension 110 g of slaked lime suspension is added from the equipment No. 2 with stirring. During stirring the temperature in the reactor No 3 is kept at 35-40 °C by means of thermostat No. 4/2. Parallel with the addition of the slaked lime suspension 510 g of copper sulfate solution is added continuously from the equipment No. 1 (it takes about 35 minutes) while the pH is kept between 8 and 10. The stirring in the equipment is continued for 15 minutes. The pH value should be adjusted to 8-8.2, if necessary by addition of copper sulfate solution (maximum 0-10 g is needed). After the adjustment of pH the half of the suspension (500 ml) in the reactor is drained and the repetition of the precipitation is continued.

### Example 1d)

To 500 ml of bordeaux complex obtained according to Example 1c) slaked lime suspension in the quantity given in Example 1c) (110 g) and copper sulfate solution (510 g) are added at 35-40 °C in that way that the pH be between 8 and 10. (The addition takes about 35 minutes). The mixture is stirred for further 15 minutes. The pH value should be between 8 and 8,2. If necessary the pH is corrected by addition of copper sulfate solution according to Example 1c). The reaction mixture obtained is halved (500 ml). The sequential precipitation described above is repeated seven times.

The average particle size d (nm) of the starting and sequential precipitations are the following:

| Example | Average particle size d (nm) |
|---|---|
| Example 1b) starting precipitation | 13200 |
| Example 1c) | 3600 |
| Example 1d) | 1900 |
| Example 1d) 1^{st} repetition | 1400 |
| Example 1d) 2^{nd} repetition | 1000 |
| Example 1d) 3^{rd} repetition | 700 |
| Example 1d) 4^{th} repetition | 720 |
| Example 1d) 5^{th} repetition | 700 |
| Example 1d) 6^{th} repetition | 670 |
| Example 1d) 7^{th} repetition | 670 |

The composition obtained after the 7^{th} repetition has the following properties:

| | |
|---|---|
| density: | 1.23 g/cm³ |
| tribasic copper sulfate/calcium complex content: | 350 g/l (28.5 % by weight) |

### Example 1e)

16 g of SD (ethoxylated (EO=10) nonylphenol phosphate monoethanolamine) is dissolved 15 minutes in 9570 g of reaction mixture obtained after the 7^{th} repetition in Example 1d) using normal laboratory mixer.

In a separate vessel 1g of emulsifier is added to 9 g of paraffin oil. The dissolution is carried out with stirring for 5 minutes. To the homogenous solution 2 g of Xantan gum is weighed, then the mixture is homogenized for 15 minutes with stirring.

To the reaction mixture containing SD the paraffin oil suspension is added with stirring. The homogenization is continued by means of an intensive suspension homogenizer for 15 minutes.

The composition according to Example 1e) has the following properties:

| | | |
|---|---|---|
| particle size | <30 µm | 100% |
| | <5 µm (ultrasound sieve) | 98.1 % |
| d (nm) (laser) | | 670 |
| tribasic copper sulfate/calcium complex | | 344 g/l (27 % by weight) |
| floatability | | 96.7 % |
| density | | 1.22 g/cm³ |

### Example 2a)

Into the equipment No. 1 shown on Figure 1 used for dissolving copper sulfate the following materials are weighed in the given order:
1220 g of water of 80 °C
200 g of PD
1000 g of copper sulfate pentahydrate (CuSO₄·5H₂O).

The mixture is stirred until complete dissolution. The solution is kept at 80 °C by means of the thermostat No. 4/1.

Into the equipment No. 2 shown on Figure 1 used for preparation of slaked lime suspension the following materials are weighed at 20-25 °C:
950 g of slaked lime (of 50 % by weight calcium hydroxide content)
100 g of PD.

The intensive stirring is continued (for about 15-20 minutes) until homogenous, thin suspension is obtained. Then
120 g of ethylene glycol is added.

The stirring is continued for further 5 minutes.

The preparation of the copper sulfate/slaked lime suspension is repeated several times in the further Examples, if necessary.

### Example 2b)

The starting bordeaux complex precipitation is carried out in the reactor No.3 shown on Figure 1.

Into the equipment No. 3 326 g of slaked lime is weighed from the equipment No. 2. With stirring at 55-65 °C 1100 g of copper sulfate solution is added to the lime from the equipment No. 1. in a period of 80 minutes, while the pH is kept between 8 and 10. The temperature of the reactor No. 3. is regulated by the thermostat No. 4/2.

After the addition is completed the stirring is continued for 25 minutes. The pH value should be adjusted to 8-8,2. If necessary, the pH is corrected by copper sulfate solution (maximum 0-20 g is needed).

### Example 2c)

The sequential precipitation is carried out in the following way.

The suspension prepared according to Example 2b) in the equipment No. 3, the volume of which is about 1000 ml (h₁ = 1000 ml), is halved (h₂ = 500 ml). To this 500 ml starting suspension 163 g of slaked lime suspension is added from the equipment No. 2 with stirring, while the temperature in the reactor No 3 is kept at 50-55 °C by means of the thermostat No. 4/2. Parallel with the addition of the slaked lime suspension 550 g of copper sulfate solution is added continuously from the equipment No. 1 (it takes about 45 minutes) while the pH value is kept between 8 and 10. The stirring in the equipment is continued for 15 minutes. The pH value should be adjusted to 8-8.2, if necessary, by the addition of copper sulfate solution (maximum 0-10 g is needed). After the adjustment of the pH, the half of the suspension (500 ml) in the reactor is drained and the repetition of the precipitation is continued.

### Example 2d)

To 500 ml of bordeaux complex obtained according to Example 2c) slaked lime suspension in the quantity given in Example 2c) (163 g) and copper sulfate solution (550 g) are added at 50-55 °C in that way that the pH be between 8 and 10. (It takes about 45 minutes). The mixture is stirred for further 15 minutes. The pH value must be between 8 and 8.2. If necessary, the pH value is corrected by addition of copper sulfate solution according to Example 2c). The reaction mixture obtained is halved (500 ml). The sequential precipitation described in Example 2d) is repeated seven times.

The average particle size d (nm) of the starting and sequential precipitations are the following:

| Example | Average particle size d (nm) |
|---|---|
| Example 2b) (starting precipitation) | 14100 |
| Example 2c) | 4200 |
| Example 2d) | 2200 |
| Example 2d) 1^{st} repetition | 1600 |
| Example 2d) 2^{nd} repetition | 1200 |
| Example 2d) 3^{rd} repetition | 900 |
| Example 2d) 4^{th} repetition | 950 |
| Example 2d) 5^{th} repetition | 820 |
| Example 2d) 6^{th} repetition | 710 |
| Example 2d) 7^{th} repetition | 720 |

The composition obtained after the 7^{th} repetition has the following properties:

| | |
|---|---|
| density: | 1.32 g/cm³ |
| tribasic copper sulfate/calcium complex content: | 466 g/l (37.9 % by weight) |

### Example 2e)

In 15 minutes 34.1 g of SD is dissolved in 1261 g of reaction mixture obtained after the 7^{th} repetition in Example 2d) using normal laboratory mixer.

In a separate vessel 1.3 g emulsifier is added to 11.8 g paraffin oil. The dissolution is carried out with stirring for 5 minutes. To the homogenous solution 2.6 g of Xantan gum is weighed, then the mixture is homogenized for 15 minutes by stirring.

To the reaction mixture containing SD the paraffin oil suspension is added with stirring. The homogenization is continued by means of an intensive suspension homogenizer for 15 minutes.

The composition according to Example 2e) has the following properties:

| | | |
|---|---|---|
| particle size | <30 µm | 100% |
| | <5 µm (ultrasound sieve) | 98 % |
| d (nm) (laser) | | 720 |
| tribasic copper sulfate/calcium complex | | 445 g/l (36.2 % by weight) |
| floatability | | 98 % |
| density | | 1.32 g/cm³ |

### Example 3a)

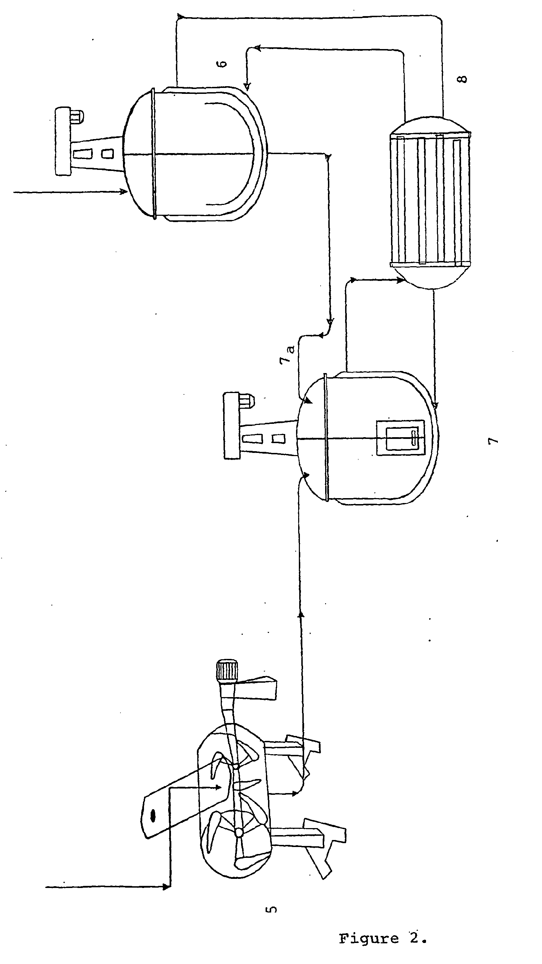

Into the equipment No. 5 shown in Figure 2 the following materials are weighed in the given order with stirring:
0.55 kg of calcium hydroxide (particle size: 95 % under 0.1 mm)
0.8 kg of PD
3.29 kg of copper sulfate pentahydrate (CuSO₄·5H₂O) (particle size: 95 % under 0.2 mm).

Stirring is continued for 15 minutes.

### Example 3b)

300 g water of 20 °C is weighed into the reactor No. 7 shown on Figure 2 from the equipment No. 6. The high speed mixer No. 7/a is set to 9000 rpm, and from the equipment No. 5 464 g of powder mixture is added at uniform rate in 20 minutes. The suspension is stirred for 10 minutes. The pH varies between 8 and 10 during the course of precipitation. The precipitation is held at 25-35 °C. The temperature is regulated by means of the thermostat No. 8.

The resulting product is a thick suspension having the following properties:

| | |
|---|---|
| particle size (microscope): | 1-5 µm |
| d (laser): | 3.4 µm |
| tribasic copper sulfate/calcium complex content: | 574 g/l |

The suspension formed can be made thin only by dilution with water. Example 4

It is identical with Example 3b) except that the precipitation is carried out at 50 °C.

The resulting product is a thin suspension having the following properties:

| | |
|---|---|
| particle size (microscope): | 1-3 µm |
| d (laser): | 1.6 µm |
| tribasic copper sulfate/calcium complex content: | 574 g/l. |

### Example 5

It is identical with Example 3b) except that the precipitation is carried out at 80°C.

The resulting product is a thin suspension having the following properties:

| | |
|---|---|
| particle size (microscope): | under 1 µm |
| d (laser): | 710 nm (0.7 µm) |
| tribasic copper sulfate/calcium complex content: | 574 g/l |
| density: | 1.38 g/cm³. |

### Example 6a)

Into the equipment No. 5 shown on Figure 2 the following materials are weighed in the given order with stirring:
0.67 kg of slaked lime (calcium oxide) (particle size under 0.1 mm)
0.8 kg of PD
3,29 kg of copper sulfate pentahydrate (CuSO₄·5H₂O) (particle size: 95 % under 0.2 mm).

The mixture is stirred for 15 minutes.

### Example 6b)

From the equipment No. 6 150 g of water of 80°C is weighed into the reactor No. 7 shown on Figure 2. The high-speed mixer No. 7/a is set to 9000 rpm. From the equipment No.5 238 g of powder mixture is added at a uniform rate in 30 minutes. The suspension is stirred for 10 minutes. In the course of precipitation the pH value varies between 8 and 10. The temperature is regulated by means of the thermostat No. 8.

Under the above conditions the precipitation is repeated in the equipment No. 7 in such a way that the further 50 % working volume is assured by taking away the 50 % by volume of the reactor space.

The homogenous product obtained after the third sequential precipitation is a thin suspension having the following properties:

| | |
|---|---|
| particle size (microscope): | under 1 µm |
| d (laser): | 630 nm (0.63 µm) |
| tribasic copper sulfate/calcium complex content: | 586 g/l. |

### Example 7

The process according to Example 4 is followed with the exception that the precipitations are carried out at 20 °C with 60 minutes addition time.

The homogenous product obtained after the third sequential precipitation is a thick, but manageable suspension having the following properties:

| | |
|---|---|
| particle size (microscope): | 1 µm |
| d (laser): | 785 nm |
| tribasic copper sulfate/calcium complex content: weight) | 589 g/l. (47.9 % by |

### Example 8

The process according to Example 4 is followed with the exception that the precipitation is carried out each time at 50 °C with 35 minutes addition time.

The homogenous product obtained after the third sequential precipitation is a thin suspension having the following properties:

| | |
|---|---|
| particle size (microscope): | under 1 µm |
| d (laser): | 680 nm |
| tribasic copper sulfate/calcium complex content: weight) | 586 g/l. (47.9 % by |
| density: | 1.39 g/cm³. |

### Example 9

The process according to Example 4 is followed with the exception that the precipitation is carried out each time at 80 °C over 10 minutes.

The homogenous product obtained after the third sequential precipitation is a thin suspension having the following properties:

| | |
|---|---|
| particle size (microscope): | about under 1 µm |
| d (laser): | 660 nm |
| tribasic copper sulfate/calcium complex content: weight) | 589 g/l (47.9 % by |
| density: | 1.39 g/cm³. |

### Example 10

In the equipment No. 6 shown on Figure 2 0.13 kg of SD is dissolved in 1.12 kg of water with stirring. From the equipment No. 6 250 g of the solution is weighed into the reactor No. 7. The Ultra turrax mixer is set to 9000 rpm.

Into the equipment No. 5 956 g of powder mixture prepared according to Example 6a is added in 20 minutes. The suspension is homogenized for further 10 minutes. In the course of precipitation the pH value varies between 8 and 10. In the equipment No. 7 the precipitation is repeated seven times under the above conditions in such a way that after halving the mixture the precipitations are weighed on each other.

The homogenous product obtained after the third sequentional precipitation is a thin suspension having the following properties:

| | |
|---|---|
| particle size (microscope): | under 1 µm |
| d (laser): | 720 nm |
| tribasic copper sulfate/calcium complex content: | 879 g/l. |
| density: | 1.57 g/cm³. |

### Example 11

The process according to Example 6b) is followed, the sequential precipitation is carried out in such a way that the temperature of the reaction mixture is 80 °C and the powder mixture is added over 20 minutes. The product is a thin suspension having the following properties:

| | |
|---|---|
| particle size (microscope): | under 1 µm |
| d (laser): | 710 nm |
| tribasic copper sulfate/calcium complex content: weight) | 872 g/l. (72.9 % by |
| density: | 1.57 g/cm³. |

### Example 12

The process according to Example 6b) is followed by carrying out the precipitation once, the temperature of the reaction mixture is 20 °C and the addition time of the powder mixture is 20 minutes.

The product is a thickening, agglomerated solid phase of

| | |
|---|---|
| particle size (microscope): | 10-150 µm. |

### Example 13

Into the equipment No. 5 shown on Figure 2 the following materials are weighed in the given order with stirring:
0.67 kg of slaked lime in powder form (particle size under 0.1 mm)
0.8 kg of PD
3.29 kg of copper sulfate pentahydrate (CuSO₄·5H₂O) (particle size: 95 % under 0.2 mm).

The mixture is stirred for 15 minutes.

From the equipment No. 6 150 g of water of 80 °C is weighed into the reactor No. 7 shown on Figure 2. The high-speed mixer No. 7/a is set to 9000 rpm. From the equipment No.5 238 g of powder mixture is added at uniform rate in 20 minutes. The suspension is stirred for 10 minutes. In the course of precipitation the pH value varies between 8 and 10. The temperature is regulated by means of the thermostat No. 8.

Under the above conditions the precipitation is repeated three more times in the equipment No. 7 in such a way that the precipitations are weighed on each other.

The homogenous product obtained after the third sequential precipitation is a thin suspension having the following properties:

| | |
|---|---|
| particle size (microscope): | under 1 µm |
| d (laser): | 630 nm (0.63 µm) |
| tribasic copper sulfate/calcium complex content: weight) | 586 g/l. (47.9 % by |
| density: | 1.39 g/cm³. |

### Example 14

To 820 g of reaction mixture prepared according to Example 8, 365 g of water and 20 g of Emulson AG/7745 (SD) are added, and the mixture is homogenized for 15 minutes by using normal laboratory mixer.

In a separate vessel to 11 g of paraffin oil 1.3 g of Emulsogen M is added and dissolved in 5 minutes with stirring. To the homogenous solution 2.5 g of Xantan gum is weighed, and the mixture is homogenized by stirring for 15 minutes. The paraffin oil suspension is added to the SD containing reaction mixture with stirring.

The homogenization is continued for 15 minutes by applying an intensive suspension homogenizer. The product according to Example 14 has the following properties:

| | |
|---|---|
| particle size <30 µm: | 100 % |
| (ultrasound sieve) < 5 µm | 98 % |
| d (nm) (laser): | 710 nm |
| floatability | 97% |
| density: | 1.22 g/cm³ |
| tribasic copper sulfate/calcium complex content: | 350 g/l. |

### Example 15

To 1092 g of reaction mixture prepared according to Example 8, 168.5 g of water and 31.1 g of SD is added, and the mixture is homogenized for 15 minutes using normal laboratory mixer.

In a separate vessel in 11 g of paraffin oil 1.3 g of emulsifier is weighed and dissolved by stirring the mixture for 5 minutes. To the homogenous solution 2.6 g of Xantan gum is weighed, then the mixture is homogenized for 15 minutes by stirring.

The paraffin oil suspension is added with stirring to the SD containing reaction mixture. The homogenization is continued for 15 minutes by using an intensive suspension-homogenizer. The product according to Example 15 has the following properties:

| | |
|---|---|
| particle size <30 µm: | 100 % |
| (ultrasound sieve) < 5 µm | 98 % |
| d (nm) (laser): | 710 nm |
| floatability | 96 % |
| density: | 1.31 g/cm³ |
| tribasic copper sulfate/calcium complex content: | 466 g/l. |

### Example 16

To 1316 g of reaction mixture prepared according to Example 8, 40 g of SD is weighed, and the resulting mixture is homogenized for 15 minutes by using normal laboratory mixer.

In a separate vessel in 12 g of paraffin oil 1.3 g of emulsifier is added and dissolved by stirring the mixture for 5 minutes. To the homogenous solution 2.0 g of Xantan gum is added, then the mixture is homogenized by stirring for 15 minutes. The paraffin oil suspension is added to the SD containing reaction mixture with stirring.

The homogenization is continued for 15 minutes using an intensive suspension-homogenizator. The product according to Example 16 has the following properties:

| | | |
|---|---|---|
| particle size | <30 µm | 100 % |
| (ultrasound sieve) | < 5 µm | 98 % |
| d (nm) (laser): | | 720 nm |
| floatability | | 97% |
| density: | | 1.37 g/cm³ |
| tribasic copper sulfate/calcium complex content: | | 550 g/l. |

### Example 17

The reaction product obtained by the calcium oxide powder mixture precipitation according to Example 13 is formulated using the same quantity of components described in Example 15.

The examined parameters of the final composition are identical with those described in Example 15.

### Example 18

To 839 g of reaction mixture prepared according to Example 11, 421.5 g of water and 34.1 g of SD is weighed, and the resulting mixture is homogenized for 15 minutes by using normal laboratory mixer.

In a separate vessel to 11.8 g of paraffin oil 1 g of emulsifier is added and dissolved by stirring the mixture for 5 minutes. To the homogenous solution 2.6 g of Xantan gum is added, then the mixture is homogenized by stirring for 15 minutes. The paraffin oil suspension is added to the SD containing reaction mixture with stirring. The homogenization is continued for 15 minutes by using an intensive suspension-homogenizator. The product according to Example 18 has the following properties:

| | |
|---|---|
| particle size <30 µm | 100 % |
| (ultrasound sieve) < 5 µm | 98 % |
| d (nm) (laser): | 700 nm |
| floatability | 98 % |
| density: | 1.31 g/cm³ |
| tribasic copper sulfate/calcium complex content: | 466 g/l. |

### Example 19 (Reference example)

PD/
1. dodecylbenzenesulfonic acid sodium salt (2/1 alkylbenzene)
2. methylnaphthalenesulfonic acid sodium salt (2/2) alkylnaphthalene monosubstituted
3. isopropylnaphthalenesulfonic acid sodium salt (2/3) alkylnaphthalene monosubstituted
4. butylnaphthalenesulfonic acid sodium dimer salt (2/4) alkylnaphthalene disubstituted
5. isohexylnaphthalenesulfonic acid sodium dimer salt (2/5) alkylnaphthalene disubstituted

### Example 19a)

In a vessel equipped with mixer 36.7 g of PD/1 is dissolved in 324.9 g of water of 50 °C. The mixture is stirred till complete dissolution. To the solution 148,4 g of copper sulfate pentahydrate is added and the stirring is continued till complete dissolution.

Into a vessel equipped with an intensive mixer 88.9 g of slaked lime and 11 g of ethylene glycol are weighed, and the mixture is stirred until a homogenous suspension is formed.

Into the equipment No. 3 110 g of slaked lime suspension is weighed. To the mixture at 45-50 °C, with stirring 55 g of copper sulfate solution is added from the equipment No. 1 in about 60 minutes. In the course of addition the pH is kept between 8 and 10. The 40-45 °C temperature of the reactor No. 3 is regulated by the thermostat No. 4/2.

The pH value must be adjusted to 8-8,2. If necessary, the pH is corrected by the addition of copper sulfate solution.

The product formed is a viscous lampy suspension.

### Example 19b)

The process according to Example 19a) is followed, but PD/2 is used instead of PD/1, and the result of the precipitation cannot be interpreted (the water solubility of PD/2 is very poor.)

### Example 19c)

The process according to Example 19a) is followed, but PD/3 is used instead of PD/1, and a suspension is formed having the following properties:

| | | |
|---|---|---|
| particle size | <30 µm: | 56 % |
| (ultrasound method) | < 5 µm | 14%. |

### Example 19d)

The process according to Example 19a) is followed, but PD/4 is used instead of PD/1, and a granular suspension is formed having the following properties:

| | | |
|---|---|---|
| particle size | <30 µm: | 88 % |
| | < 5 µm | 52 %. |

### Example 19e)

The process according to Example 19a) is followed, but PD/5 is used instead of PD/1, and a thin, granular suspension is formed having the following properties:

| | | |
|---|---|---|
| particle size | <30 µm: | 37 % |
| | <5 µm | 19%. |

## Claims

1. A suspension of hydrogel structure having an average particle size of 600-750 nm, containing 350-875 g/l of tribasic copper sulfate/calcium complex of formula CuSO₄x3Ca(OH)₂x4H₂O and methylnaphthalenesulfonic acid sodium dimer salt as primary dispersing agent (PD), a compound of formula (I) 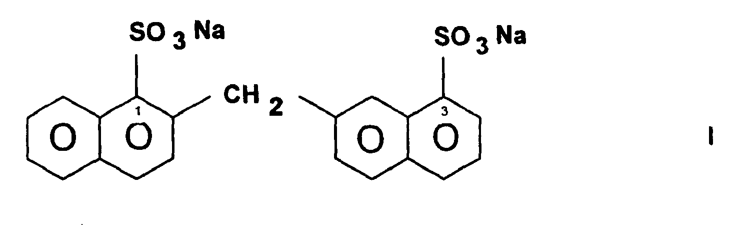
- which contains less than 4 % by weight of the monomer, less than 3 % by weight of polymer the condensation degree of which is higher than 2, less than 5 % by weight of sodium sulfate -, and optionally a secondary dispersing agent (SD) and other auxiliary materials.

2. The suspension according to Claim 1. **characterized in that** it contains 27-71.4 % by weight of tribasic copper sulfate/calcium complex, 4-10 % by weight of methylnaphthalenesulfonic acid sodium dimer salt of formula I as primary dispesing agent, 0-4 % by weight of secondary dispersing agent, 0.5-1.5 % by weight of mineral or vegetable oil, 0.1-2 % by weight of emulsifier, 0.1-0.5 % by weight of antisedimentation agent, and to 100 % by weight of water.

3. A suspension according to Claims 1. and 2. **characterized in that** it contains ethoxylated (EO=10) nonylphenol phosphate monoethanolamine salt as secondary dispersing agent.

4. A suspension according to Claims 1. and 2. **characterized in that** it contains a C₁₂₋₁₈ alcohol-polyglycol ether (EO=5-8) as emulsifier.

5. A suspension according to Claims 1. and 2. **characterized in that** it contains Xantan gum as antisedimentation agent and paraffin oil as oil.

6. Process for the preparation of a suspension of hydrogel structure having an average particle size of 600-750 nm, containing 350-875 g/l tribasic copper sulfate calcium complex of formula CuSO₄x3Ca(OH)₂x4H₂O, and methylnaphthalenesulfonic acid sodium dimer salt as primary dispersing agent (PD), a compound of formula (I) 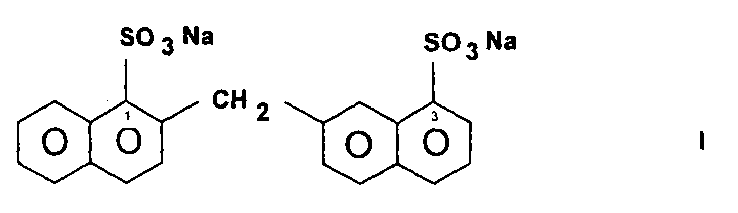
- which contains less than 4 % by weight of the monomer, less than 3 % by weight of polymer the condensation degree of which is higher than 2, less than 5 % by weight of sodium sulfate -, and optionally a secondary dispersing agent (SD) and other auxiliary materials, **characterized in that**
a) for the preparation of a suspension containing 350-470 g/l of tribasic copper sulfate/calcium complex, a solution containing copper sulfate pentahydrate, primary dispersion agent and water in a weight ratio of (29-42):(7-9):(64-50) and a suspension containing calcium hydroxide, primary dispersion agent, ethylene glycol and water in a weight ratio of (35-45):(8-10):(9-11):(38-43) are mixed during 35-45 minutes in a weight ratio of (4,6-3,3):1 in such a way that on the course of mixing the pH value is 8-10, the temperature is 35-55 °C, then the suspension containing the complex formed by precipitation is stirred till pH 8-8,2, the complex formation is repeated sequentially till 350-470 g/l complex content in such a way that the suspension content of the reactor is reduced to 40-60 % by volume, and the repeated precipitation using the conditions of the previous precipitation is completed to 100 % reactor volume, or
b) for the preparation of a suspension containing 350-875 g/l of tribasic copper sulfate/calcium complex the powder mixture containing copper sulfate pentahydrate, primary dispersion agent, calcium hydroxide in a weight ratio of (65-75):(10-20):(15-20) is added with intensive stirring at 50-80 °C to a solution containing the secondary dispersion agent and water the temperature of which is 50-80°C in a weight ratio (10-20):(80-90) in such a way that the weight ratio of the copper sulfate containing powder mixture and the secondary dispersing agent be (1,6-3,8):1, the pH 8-10, and the temperature of the precipitation 50-80 °C, then the complex formation is repeated sequentially till 350-875 g/l of complex content in such a way that the suspension content of the reactor is reduced to 40-60 % by volume, and the repeated precipitation using the conditions of the previous precipitation is completed to 100 % reactor volume, then optionally to the resulting suspension a secondary dispersing agent and other auxiliary materials are added.

7. A process according to Claim 6. **characterized in that** the particle size of the copper sulfate pentahydrate applied is in 95 % under 0.2 mm.

8. The process according to Claim 6. **characterized in that** the calcium hydroxide is applied in form of slaked lime, preferably in a particle size of 1-3 mm.

9. A process according to Claim 6. **characterized in that** the calcium hydroxide is applied in form of a powder mixture, where the particle size is in 95 % under 0.1 mm.

## Patentansprüche

1. Suspension mit hydrogel Struktur mit einer durchschnittlichen Teilchengröße von 600-700 nm, welche 350-875 g/l tribasische Kupfersulfat/ Kalzium Komplexverbindung der Formel CuSO₄x3Ca(OH)₂x4H₂O, Methylnaphtalensulfonsäure-natrium dimer Salz der Formel (I) 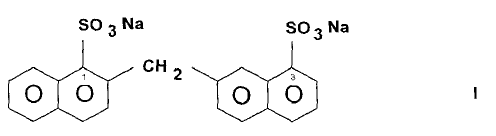
- welches weniger, als 4 Gew. % Monomer, weniger, als 3 Gew. % Polymer mit einer Polymerisationsgrade höher, als 2, und weniger, als 5 Gew. % Natriumsulfat enthält -
als primäres Dispergierungsmittel (PD), und erwünschtenfalls ein sekundäres Dispergierungsmittel (SD) zusammen mit anderen Hilfsmitteln enthält.

2. Die Suspension gemäß Anspruch 1, **dadurch gekennzeichnet, dass** es
27-71.4 Gew. % tribasische Kupfersulfat/ Kalzium Komplexverbindung,
4-10 Gew. % Methylnaphtalensulfonsäure -natrium dimer Salz der Formel (I) als primäres Dispergierungsmittel (PD),
0-4 Gew. % sekundäres Dispergierungsmittel (SD),
0,5-1,5 Gew. % Mineral- oder Pflanzenöl,
0,1-2 Gew. % Emulgierungsmittel,
0,1-0,5-Gew.% Antisedimentierungsmittel und
zur 100 Gew. % Wasser enthält.

3. Die Suspension gemäß Anspruch 1, **dadurch gekennzeichnet, dass** es als sekundäres Dispergierungsmittel ethoxyliertes (EO=10) Nonylphenol-phosfat-monoethanolamin-salz enthält.

4. Die Suspension gemäß Anspruch 1, **dadurch gekennzeichnet, dass** es als Emulgierungsmittel C₁₂₋₁ Alcohol-polyglycol-ether (EO= 5-8) enthält.

5. Die Suspension gemäß Anspruch 1, **dadurch gekennzeichnet, dass** es als Antisedimentationsmittel Xantan gum and als Öl Paraffinöl enthält.

6. Verfahren zur Herstellung eine Suspension mit hydrogel Struktur mit einer durchschnittlichen Teilchengröße von 600-700 nm, welche 350-875 g/l tribasische Kupfersulfat/ Kalzium Komplexverbindung der Formel CuSO₄x3Ca(OH)₂x4H₂O, Methylnaphtalenesulfonsäure-natrium dimer Salz der Formel (I) 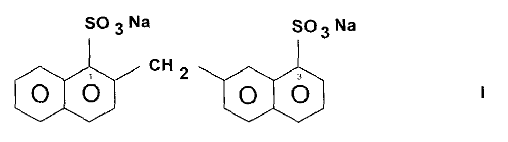
- welches weniger, als 4 Gew. % Monomer, weniger, als 3 Gew. % Polymer mit einer Polymerisationsgrade höher, als 2, und weniger, als 5 Gew. % Natriumsulfat enthält -
als primäres Dispergierungsmittel (PD), und erwünschtenfalls ein sekundäres Dispergierungsmittel (SD) zusammen mit anderen Hilfsmitteln enthält, **dadurch gekennzeichnet, dass** man
a.) zur Herstellung eine 350-470 g/l tribasische Kupfersulfat/ Kalzium Komplexverbindung enthaltende Suspension , eine Kupfersulfat-pentahydrat, primäres Dispergierungsmittel, und Wasser in einem Gewichtsverhältnis von (29-42): (7-9) : (64-50) enthaltende Lösung , mit einer Kalzium-hydroxyd, primäres Dispergierungsmittel, Ethylen-glycol und Wasser in einem Gewichtsverhältnis von (35-45) : (8-10) : (9-11) : (38-43) enthaltenden Suspension während 35-45 Minuten in einem Gewichtsverhältnis von (4,6-3,3): 1 mischt, so dass der pH-Wert 8-10 und die Temperatur 35-55° C sein soll, die erhaltene, durch die Präzipitation des Komplexes bildende Suspension bis pH-Wert 8-8,2 rührt, die Komplexbildung bis 350- 470 g/l Komplexinhalt sequenziell wiederholt, in der Weise dass man die Suspensionsmenge des Reaktors auf 40-60 Vol. % reduziert, und das Reaktorsvolumen bei der wiederholten Präzipitation bei gleichen Bedingungen als bei der vorherigen Präzipitation auf 100 % komplettiert, oder
b.) zur Herstellung eine 350-875 g/l tribasische Kupfersulfat/ Kalzium Komplexverbindung enthaltende Suspension , eine Kupfersulfat-pentahydrat , primäres Dispergierungsmittel, und Kalzium-hydroxyd in einem Gewichtsverhältnis von (65-75): (10-20): (15-20) enthaltende Pulvermischung , mit einem sekundären Dispergierungsmittel und 50-80° C heißem Wasser in einem Gewichtsverhältnis von (10-20) : (80-90) enthaltenden Lösung unter ständigen Rühren bei 50-80° C in einem Gewichtsverhältnis von (1,6-3,8): 1 der Kupfersulfat enthaltenden Pulvermischung und des sekundären Dispergierungsmittels mischt, so dass der pH-Wert 8-10 und die Temperatur der Präzipitation 50-80° C sein soll, die Komplexbildung bis 350- 875 g/l Komplexinhalt sequenziell wiederholt, in der Weise dass man die Suspensionsmenge des Reaktors auf 40-60 Vol.% reduziert, und das Reaktorsvolumen bei der wiederholten Präzipitation bei gleichen Bedingungen als bei der vorherigen Präzipitation auf 100 % komplettiert, und
erwünschtenfalls zu der entstandenen Suspension sekundäres Dispergierungsmittel und andere Hilfsmittel zufügt.

7. Verfahren gemäß Anspruch 6, **dadurch gekennzeichnet, dass** die Teilchengröße des verwendeten Kupfersulfat-pentahydrates in 95 % unter 0,2 mm liegt.

8. Verfahren gemäß Anspruch 6, **dadurch gekennzeichnet, dass** Kalzium-hydroxyd in Form von gelöschtem Kalk, vorzugsweise in Teilchengröße von 1-3 mm verwendet wird.

9. Verfahren gemäß Anspruch 6, **dadurch gekennzeichnet, dass** Kalzium-hydroxyd in Form von Pulvermischung verwendet wird, wobei die Teilchengröße in 95 % unter 0,1 mm liegt.

## Revendications

1. Une suspension à structure hydrogel ayant une dimension particulaire moyenne de 600-750 nm, contenant 350-875 g/l d'un complexe tribasique sulfate de cuivre/calcium de formule CuSO₄x3Ca(OH)₂x4H₂O et d'un sel sodique dimer de l'acide méthylnaphtalènesulfonique en tant que premier agent dispersant (PD), un composé de formule I 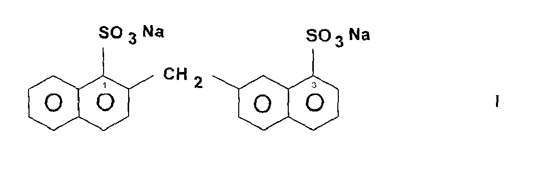
- contenant moins que 4 % en masse du monomère, moins que 3 % en masse du polymère dont le degré de condensation est supérieur à 2, moins que 5 % en masse de sulfate de sodium -, et le cas échéant, un agent dispersant secondaire (SD) et d'autres produits auxiliaires.

2. La suspension selon la revendication 1 **caractérisée en ce qu'**elle contient 27-71,4 % en masse du complexe tribasique sulfate de cuivre/calcium, 4-10 % en masse du sel sodique dimer de l'acide méthylnaphtalènesulfonique de formule I en tant que premier agent dispersant, 0-4 % en masse de l'agent dispersant secondaire, 0,5-1,5 % en masse d'une huile minérale ou végétable, 0,1-2 % en masse d'un agent émulsifiant, 0,1-0,5 % en masse d'un agent antisédimentation et de l'eau en quantité suffisante pour 100 % en masse.

3. Une suspension selon les revendications 1 et 2, **caractérisée en ce qu'**elle contient d'un sel monoéthanolamine du nonylphénol phosphate éthoxylé (EO=10) en tant qu' agent dispersant secondaire.

4. Une suspension selon les revendications 1 et 2, **caractérisée en ce qu'**elle contient un éther d'alcool en C₁₂₋₁₈ et de polyglycol (EO=5-8) en tant qu'agent émulsifiant.

5. Une suspension selon les revendications 1 et 2, **caractérisée en ce qu'**elle contient de gomme de xanthane en tant qu'agent antisédimentation et de l'huile de paraffine en tant qu'huile.

6. Procédé pour la préparation d'une suspension à structure hydrogel ayant une dimension particulaire moyenne de 600-750 nm, contenant 350-875 g/l d'un complexe tribasique sulfate de cuivre/calcium de formule CuSO₄x3Ca(OH)₂x4H₂O et d'un sel sodique dimer de l'acide méthylnaphtalènesulfonique en tant que premier agent dispersant (PD), un composé de formule I 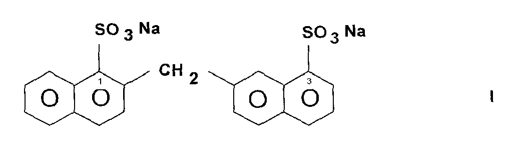
- contenant moins que 4 % en masse du monomère, moins que 3 % en masse du polymère dont le degré de condensation est supérieure à 2, moins que 5 % en masse de sulfate de sodium -, et le cas échéant, un agent dispersant secondaire (SD) et d'autres produits auxiliaires, **caractérisé en ce que**
a) pour la préparation d'une suspension contenant 350-470 g/l du complexe tribasique sulfate de cuivre/calcium, on mélange, pendant 35-45 minutes et dans un rapport massique de (4,6-3,3):1, une solution contenant de sulfate de cuivre pentahydrate, du premier agent dispersant et de l'eau dans un rapport massique de (29-42):(7-9):(64-50) avec une suspension contenant d'hydroxyde de calcium, de premier agent dispersant, d'éthylène glycol et de l'eau dans un rapport massique de (35-45):(8-10):(9-11):(38-43), de manière que pendant le mélange la valeur de pH soit de 8-10, la température soit de 35-55 °C, puis la suspension contenant le complexe formé par précipitation est agitée jusqu'à une valeur de pH 8-8,2, la formation du complexe est répétée séquentiellement jusqu'à une teneur en complexe de 350-470 g/l, de telle manière que la teneur en suspension dans le réacteur diminue à 40-60 % en volume, et la précipitation est répétée en utilisant les conditions de la précipitation précédente jusqu'à 100 % du volume du réacteur, ou bien
b) pour la préparation d'une suspension contenant 350-875 g/l du complexe tribasique sulfate de cuivre/calcium, le mélange de poudres contenant le sulfate de cuivre pentahydrate, le premier agent dispersant, l'hydroxyde de calcium dans un rapport massique de (65-75):(10-20):(15-20) est ajouté sous agitation intense à 50-80 °C à une solution contenant l'agent dispersant secondaire et de l'eau dont la température est de 50-80 °C, dans un rapport massique de (10-20):(80-90), de manière que le rapport massique entre le mélange de poudres contenant le sulfate de cuivre et l'agent dispersant secondaire soit (1,6-3,8):1, la valeur de pH soit 8-10, et la température de la précipitation soit 50-80 °C, puis la formation du complexe est répétée séquentiellement jusqu'à une teneur en complexe de 350-875 g/1, de telle manière que la teneur en suspension dans le réacteur diminue à 40-60 % en volume, et la précipitation est répétée en utilisant les conditions de la précipitation précédente jusqu'à 100 % du volume du réacteur, et puis, le cas échéant, un agent dispersant secondaire et d'autres produits auxiliaires sont ajoutés à la suspension obtenue.

7. Procédé selon la revendication 6, **caractérisé en ce que** 95 % des particules du sulfate de cuivre pentahydrate utilisé ont une taille inférieure à 0,2 mm.

8. Le procédé selon la revendication 6, **caractérisé en ce que** l'hydroxyde de calcium est utilisé sous forme de chaux éteinte, de préférence à une dimension particulaire de 1-3 mm.

9. Procédé selon la revendication 6, **caractérisé en ce que** l'hydroxyde de calcium est utilisé sous forme d'un mélange de poudres dans lequel 95 % des particules ont une taille inférieure à 0,1 mm.
